# EUROPEAN PATENT SPECIFICATION

(11) **EP 3 183 930 B1**
(45) Date of publication and mention of the grant of the patent: **02.01.2019**
(21) Application number: 15735757.5
(22) Date of filing: 16.06.2015
(51) Int. Cl.: H04W 72/04, H04W 36/00, H04W 52/40, H04L 5/00, H04W 76/27, H04W 88/02, H04W 88/08, H04W 88/12, H04B 17/00

(54) **A NODE AND METHOD FOR ESTABLISHING A RADIO LINK WITHOUT A DEDICATED PHYSICAL CHANNEL/FRACTIONAL-DEDICATED PHYSICAL CHANNEL**
KNOTEN UND VERFAHREN ZUM AUFBAU EINER FUNKVERBINDUNG OHNE EINEN DEDIZIERTEN PHYSIKALISCHEN KANAL/FRAKTIONAL-DEDIZIERTEN PHYSIKALISCHEN KANAL
NOEUD ET PROCÉDÉ D'ÉTABLISSEMENT DE LIAISON RADIO SANS CANAL PHYSIQUE DÉDIÉ/CANAL PHYSIQUE FRACTIONNAIRE DÉDIÉ

(30) Priority: 18.08.2014 US 201462038464 P
(43) Date of publication of application: 28.06.2017
(73) Proprietor: Telefonaktiebolaget LM Ericsson (publ), 164 83 Stockholm (SE)
(72) Inventor: SHI, Nianshan, S-176 74 Järfälla (SE); LIDIAN, Namir, S-171 49 Solna (SE); WANG, Min, S-973 46 Luleå (SE)
(74) Representative: Ericsson
(86) International application number: PCT/SE2015/050711
(87) International publication number: WO 2016/028202

(56) References cited:
- EP-A1- 1 912 458
- WO-A1-2007/024558
- HUAWEI: "Open issues for UTRAN Heterogeneous Networks", 3GPP DRAFT; R3-141592_OPEN_ISSUES_UTRAN_HETNET, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Dresden, Germany; 20140818 - 20140822 17 August 2014 (2014-08-17), XP050795984, Retrieved from the Internet: URL:http://www.3gpp.org/ftp/Meetings_3GPP_ SYNC/RAN3/Docs/ [retrieved on 2014-08-17]
- RAN WG1: "LS on interference management techniques in Hetnet", 3GPP DRAFT; R2-142815_R1-142613, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Seoul; 20140519 - 20140523 23 May 2014 (2014-05-23), XP050793928, Retrieved from the Internet: URL:http://www.3gpp.org/ftp/Meetings_3GPP_ SYNC/RAN2/Docs/ [retrieved on 2014-05-23]
- HUAWEI ET AL: "Discussion on solutions to mitigate interference from non-SHO users", 3GPP DRAFT; R1-141671 DISCUSSION ON SOLUTIONS TO MITIGATE INTERFERENCE FROM NON-SHO USERS, 3RD GENERATION PARTNERSHIP PROJECT (3GPP), MOBILE COMPETENCE CENTRE ; 650, ROUTE DES LUCIOLES ; F-06921 SOPHI , vol. RAN WG1, no. Shenzhen, China; 20140331 - 20140404 30 March 2014 (2014-03-30), XP050787338, Retrieved from the Internet: URL:http://www.3gpp.org/ftp/Meetings_3GPP_ SYNC/RAN1/Docs/ [retrieved on 2014-03-30]

## Description

### TECHNICAL FIELD

Example embodiments presented herein are directed towards a Radio Network Controller (RNC) and a radio network node, for example a eNodeB and/or a wireless terminal, and corresponding methods therein, for establishing a radio link without a Dedicated Physical Channel (DPCH) or a Fractional-DPCH (F-DPCH).

### BACKGROUND

In a typical cellular system, also referred to as a wireless communications network, wireless terminals, also known as mobile stations and/or user equipment units communicate via a Radio Access Network (RAN) to one or more core networks. The wireless terminals can be mobile stations or user equipment units such as mobile telephones also known as "cellular" telephones, and laptops with wireless capability, e.g., mobile termination, and thus can be, for example, portable, pocket, hand-held, computer-comprised, or car-mounted mobile devices which communicate voice and/or data with radio access network.

The radio access network covers a geographical area which is divided into cell areas, with each cell area being served by a base station, e.g., a Radio Base Station (RBS), which in some networks is also called "NodeB" or "B node" or "Evolved NodeB" or "eNodeB" or "eNB" and which in this document also is referred to as a base station. A cell is a geographical area where radio coverage is provided by the radio base station equipment at a base station site. Each cell is identified by an identity within the local radio area, which is broadcast in the cell. The base stations communicate over the air interface operating on radio frequencies with the user equipment units within range of the base stations.

In some versions of the radio access network, several base stations are typically connected, e.g., by landlines or microwave, to a Radio Network Controller (RNC). The radio network controller, also sometimes termed a Base Station Controller (BSC), supervises and coordinates various activities of the plural base stations connected thereto. The radio network controllers are typically connected to one or more core networks.

The Universal Mobile Telecommunications System (UMTS) is a third generation mobile communication system, which evolved from the Global System for Mobile Communications (GSM), and is intended to provide improved mobile communication services based on Wideband Code Division Multiple Access (WCDMA) access technology. UMTS Terrestrial Radio Access Network (UTRAN) is essentially a radio access network using wideband code division multiple access for user equipment units (UEs). The Third Generation Partnership Project (3GPP) has undertaken to evolve further the UTRAN and GSM based radio access network technologies. Long Term Evolution (LTE) together with Evolved Packet Core (EPC) is the newest addition to the 3GPP family.

A heterogeneous network often indicates the use of multiple types of access nodes in a wireless network. A Wide Area Network can use Macro cells, Pico cells, and/or Femto cells in order to offer wireless coverage in an environment with a wide variety of wireless coverage zones, ranging from an open outdoor environment to office buildings, homes, and underground areas.

### SUMMARY

In heterogeneous networks, there is a need to mitigate an uplink (UL) and/or downlink (DL) imbalance due to different transmission powers between, for example, macro and Low Power Nodes (LPN) and to minimize the uplink interference to lower power nodes created by users in a non-soft handover area. Two example methods for means for solving the above mentioned issues are the use of 'extended Enhanced Dedicated Channel (E-DCH) comprises only an E-DCH Acknowledgement Indicator Channel (E-HICH)' or an E-DCH Acknowledgement Indicator Channel (E-HICH)' and 'common E-DCH Relative Grant Channel (E-RGCH)'. Both of means require the establishment of a radio link without the use of Dedicated Physical Channel (DPCH) or a Fractional-DPCH (F-DPCH).

The 3GPP specification 25.331 Radio Resource Control RRC Protocol Specification version 12.2.0 doesn't support the signalling of a radio link (RL) without the use of DPCH/F-DPCH, which therefore makes it impossible for the UE to indicate that it has the capability to support a RL without DPCH/F-DPCH. Furthermore, the network cannot configure the RL in UE without the use of DPCH/F-DPCH because the current signalling procedures are not configured to allow such an operation.

Other prior art examples are: 3GPP draft document R3-141592, Title: "Open issues for UTRAN Heterogeneous Networks", Source: Huawei; 3GPP draft document R2-142815, Title: "LS on interference management techniques in Hetnet"; Source: RAN WG1; 3GPP draft document R1-141671, Title: "Discussion on solutions to mitigate interference from non-SHO", Source: Huawei, HiSilicon; WO2007024558 A1 20070301; and EP1912458 A1 20080416.

A need exists to convey information to configure a radio link which can be added to the LPN without DPCH/F-DPCH. Thus, the example embodiments presented herein provide a means for establishing a radio link without a DPCH/F-DPCH. An example advantage of the example embodiments presented herein is providing a radio link without the use of DPCH/F-DPCH, while solving any backwards compatibility issues.

Accordingly, some of the example embodiments are directed towards a method, in a RNC, for establishing a radio link without a DPCH/ F-DPCH in a wireless communications network. The method comprises sending, to a radio network node, a communication message associated with the establishment of the radio link. The communication message comprises an indicator providing an indication to set up the radio link without the DPCH/F-DPCH. It should be appreciated that herein a radio network may be a Node B or a wireless terminal.

Some of the example embodiments are directed towards a Radio Network Controller (RNC) for establishing a radio link without a DPCH/ F-DPCH in a wireless communications network. The RNC comprises a transmitter configured to transmit, to a radio network node, a communication message associated with the establishment of the radio link. The communication message comprises an indicator providing an indication to set up the radio link without the DPCH/F-DPCH.

Some of the example embodiments are directed towards a method, in a radio network node, for establishing a radio link without a DPCH/ F-DPCH in a wireless communications network. The method comprises receiving, from a RNC, a communication message associated with the establishment of the radio link. The communication message comprises an indicator providing an indication for establishing the radio link without the DPCH/F-DPCH.

Some of the example embodiments are directed towards a radio network node for establishing a radio link without a DPCH/ F-DPCH in a wireless communications network. The radio network node comprises a receiver configured to receive, from a RNC, a communication message associated with the establishment of the radio link. The communication message comprises an indicator providing an indication for establishing the radio link without the DPCH/F-DPCH.

### DEFINITIONS

- 3GPP: Third Generation Partnership Project
- BSC: Base Station Controller
- CPU: Control Processing Unit
- DL: Downlink
- DCH: Dedicated Channel
- DPCH: Dedicated Physical Channel
- DTX: Discontinuous Transmission
- E-DCH: Enhanced Dedicated Channel
- E-HICH: E-DCH HARQ Acknowledgement Indicator Channel
- E-RGCH: Enhanced Relative Grant Channel
- E-UTRAN: Evolved Universal Terrestrial Radio Access Network
- eNodeB: Evolved NodeB
- EPC: Evolved Packet Core
- FACH: Forward Access Channel
- FDD: Frequency Division Duplex
- F-DPCH: Fractional- Dedicated Physical Channel
- GERAN: GSM/EDGE Radio Access Network
- HARQ: Hybrid Automatic Repeat Request
- IE: Information Element
- LPN: Low Power Node
- LTE: Long Term Evolution
- NBAP: Node-B Application Part
- NW: Network
- RAN: Radio Access Network
- RBS: Radio Base Station
- RL: Radio Link
- RNC: Radio Network Controller
- RNSAP: Radio Access Network Application Part
- RRC: Radio Resource Control
- UE: User Equipment
- UL: Uplink
- UMTS: Universal Mobile Telecommunications System
- UTRAN: UMTS Terrestrial Radio Access Network
- WCDMA: Wideband Code Division Multiple Access
- WiFi: Wireless Fidelity
- WLAN: Wireless Local Area Network

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
FIG. 1 is a message signalling diagram illustrating the establishment of a radio link without DPCH/F-DPCH, according to some of the example embodiments presented herein;
FIG. 2 is an example node configuration of an RNC, according to some of the example embodiments presented herein;
FIG. 3 is an example node configuration of a radio network node, according to some of the example embodiments presented herein;
FIG. 4 is a further message signalling diagram depicting example operations which may be taken by the RNC and radio network node of FIGS. 2 and 3, respectively, according to some of the example embodiments presented herein; and
FIGS. 5A and 5B are module diagrams depicting modules configured to perform at least some of the operations of FIG. 4, according to some of the example embodiments presented herein.

### DETAILED DESCRIPTION

In the following description, for purposes of explanation and not limitation, specific details are set forth, such as particular components, elements, techniques, etc. in order to provide a thorough understanding of the example embodiments. However, it will be apparent to one skilled in the art that the example embodiments may be practiced in other manners that depart from these specific details. In other instances, detailed descriptions of well-known methods and elements are omitted so as not to obscure the description of the example embodiments. The terminology used herein is for the purpose of describing the example embodiments and is not intended to limit the embodiments presented herein. It should be appreciated herein that the term user equipment (UE) and wireless terminal may be used interchangeably. It should be appreciated that all of the example embodiments presented herein may be applicable to a GERAN, UTRAN, E-UTRAN, Wi-Fi based system.

### General overview

In order to provide a better explanation of the example embodiments presented herein, a problem is first identified and discussed. In the 3GPP Universal Mobile Telecommunications System (UMTS) R12 Heterogeneous Network work item 3GPP™ Work Item Description RP-131348 was proposed, thereby it is discussed about how to mitigate the uplink (UL)/downlink (DL) imbalance due to different transmission powers between Macros and Low Power Nodes (LPNs) and to minimize the uplink interference to LPNs created by the users in the non-soft hand over area. Companies have discussed different alternatives. There are mainly two alternatives agreed by Radio Access Network layer 1 (RAN1) that require the specification changes.

One alternative is called 'extended Enhanced Dedicated Channel (E-DCH)', which is designed to extend the soft handover area to cover those users who create high interference to the neighbour cells. Those users can be identified by the early triggering of the intra-frequency measurement event 1A. Upon the detection of those users, the Network (NW) orders those users to setup the radio link and add the detected neighbouring cell to the active set following the normal signalling procedure except without the setup of the DL channel F-DPCH/DPCH in the newly added cell. Such operation can achieve the benefit of the increased Macro diversity due to the extended active set. Meantime, the extra downlink control overhead due to the transmission of F-DPCH/DPCH is avoided.

The second alternative is called 'common E-DCH Relative Grant Channel (E-RGCH)'. Its design purpose is to make it possible for the interfered neighbour cells in the active set to control the serving grant of the interfering E-DCH users. The common E-RGCH in CELL_DCH can operate like the operations in CELL_FACH. This channel is common channel and in principle may be monitored by users in the neighbour cells of the victim cell, which is the cell that experiences high interferences from the neighbour cells in the imbalance region. The common E-RGCH channel carries the control information "grant down". The users who are monitor the common E-RGCH channel will have to reduce the serving grant for the data transmission in subsequent TTIs. With respect to RAN1, it has been concluded that the common E-RGCH in CELL_DCH is not a new channel, and it is achievable to establish this channel based on the existing technology, in example, share the traditional E-RGCH channel among the users, which is already possible in the current standard. Same as the first alternative, the users who are in the imbalance region and monitor the common E-RGCH channel are not required to receive the DL F-DPCH/DPCH channel from the interfered neighbour cell in imbalance region hence those cells can avoid to setup DL F-DPCH/DPCH channel in order to save the control channel overhead.

In fact, the above two alternatives are achievable by reusing the existing standard with limited changes. However, the both alternatives require the same operation to disable DL F-DPCH/DPCH when adding the radio link to the active set.

In the current RAN3 Node B Application Part (NBAP) and Radio Access Network Application Part (RNSAP) specification (3GPP TS 25.433 UTRAN lub interface Node B Application Part (NBAP) signaling version 12.1.0 and TS 25.423 UTRAN lur interface Radio Network Subsystem Application Part (RNSAP) signaling version 12.1.0), a radio link (RL) is setup either with DL DPCH or F-DPCH as a mandatory option. If the RNC includes the DL DPCH information, then the Node B shall configure DPCH in the downlink, for example, with a DL Dedicated Physical Control Channel (DPCCH) and a DL Dedicated Physical Data Channel (DPDCH), if the RNC includes the F-DPCH Information Element (IE). Then the Node B shall use F-DPCH in the downlink, for example, with transmission of only the Transmit Power Control (TPC) field for the given context.

There is no support to setup a radio link without using DPCH/F-DPCH. The current specification 25.331 Radio Resource Control RRC Protocol Specification version 12.2.0 doesn't support the signalling of a RL without DPCH/F-DPCH, which makes it impossible for the UE to indicate that it has the capability to support a RL without DPCH/F-DPCH. Furthermore, the network cannot configure the RL in UE without DPCH/F-DPCH because the current signalling doesn't allow that.

### Overview of the example embodiments

A need exists to convey information to configure a radio link which can be added to the LPN without DPCH/F-DPCH. Thus, the example embodiments presented herein provide a means for establishing a radio link without a DPCH/F-DPCH while solving any backwards compatibility issues.

According to some of the example embodiments, the establishment of the radio link without the F-DPCH/DPCH is allowed by not establishing the DL F-DPCH/DPCH configuration, for example, the Radio Resource Control (RRC) excludes the configuration information of F-DPCH/DPCH from the signalling. Thus, DPCH/F-DPCH free signalling is provided. It should be appreciated that DPCH/F-DPCH free signalling shall be interpreted as establishing a radio link without F-DPCH or DPCH. Thus, such a radio link will not include any channel of DPCH or F-DPCH, but that radio link (F-DPCH/DPCH less Radio Link) may comprise, for example, E-HICH channel only or another example that radio link (F-DPCH/DPCH less Radio Link) may comprise E-HICH and E-RGCH channels.

According to some of the example embodiments, the Node B who supports the establishment of the radio link without DPCH/F-DPCH may indicate to the RNC its capability, so there will not be an ambiguity. A new capability, for example, "Support of Radio Link without DPCH/F-DPCH for CELL_DCH", may also be added to UE's radio access capability in 25.331 specification Radio Resource Control RRC Protocol Specification version 12.2.0 to indicate to the Network UE's capability of setting up a RL without DPCH/F-DPCH as specified below: This capability indicator may be added to the IE UE radio access capability.

The remainder of the text is organized as follows. First, example embodiments directed towards the exclusion of configuration information related to a F-DPCH/DPCH channel is provided under the sub-heading *'Excluding F-DPCH*/*DPCH configuration information in signalling'.* Thereafter, an example node configuration of a node which may be a radio network node (e.g., a wireless/mobile device/terminal or a Node B) or a RNC, as well as example operations of such nodes, are provided under the sub-headings *'Example node configuration'* and *'Example node operations',* respectively.

It should be appreciated that the example embodiments presented herein may be utilized signally or in any combination. The example embodiments presented herein have the example advantage of enabling a network to be setup without DL F-DPCH/DPCH while not providing any backwards compatibility problems.

### Excluding F-DPCH/DPCH configuration information in signalling

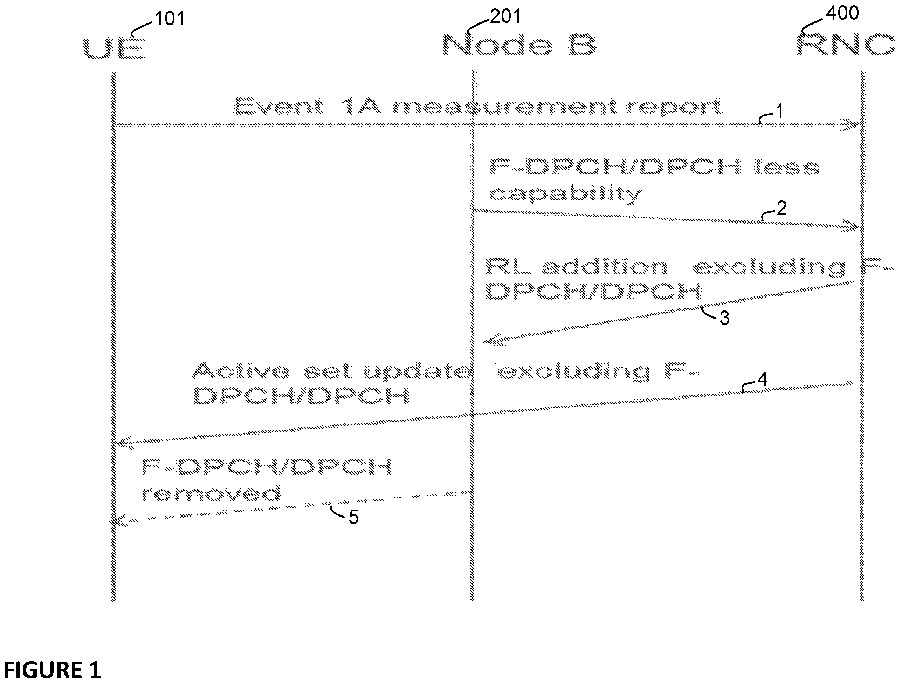

According to some of the example embodiments, the establishment of a radio link without F-DPCH/DPCH may be provided in an explicit way by explicitly avoiding the sending of the configuration information for the F-DPCH/DPCH channel in specifications. A simplified overview of the example embodiments provided under this subheading are provided in **Figure 1****.**

According to some of the example embodiments, a UE 101 may send an Event 1A measurement report to the RNC 400 via the Node B 201 (message 1). Thereafter the Node B 201 may send a capability indication that the Node B and/or the UE 101 supports the establishment of a radio link without DPCH/F-DPCH (message 2). This allows the RNC 400 to only setup the a radio link without the use of the DPCH/F-DPCH towards the new Node B, while the legacy Node B will not receive any related operation/information with respect to the radio link establishment without the DPCH/F-DPCH. The RNC 400 will thereafter send additional radio link information to the Node B 201 (message 3). The RNC 400 will also send an Active set update to the UE 101 (message 4). Both the additional radio link information and the Active set update do not comprise information for DPCH/F-DPCH configuration.

When a radio link is setup/added/reconfigured, RNC will not include any configuration information for DL DPCH/F-DPCH in lub/lur specifications. Such configuration information is typically provided in the form of optional lEs Therefore, the removal of the optional parameters may be performed without the necessity of additional lEs or messaging. When the Node B, which supports the establishment of a radio link without the use of DPCH/F-DPCH, receives such a configuration, it interprets such information as an indication to allow the radio link establishment without DPCH/F-DPCH. A legacy Node B which does not support the establishment of a radio link without DPCH/F-DPCH would report a failure of the radio link setup/addition/reconfiguration as specified in the legacy procedures.

According to some of the example embodiments, for RRC signalling between the UE and the RNC, in order to configure the UE a RL without the DPCH/F-DPCH operation a new IE can be added to the lEs "Radio Link addition information" and "Downlink information for each radio link" as another option for R12 UE. For example, this new IE can have the name "Downlink without DPCH/F-DPCH info for each RL" as specified below: The text in bold and underlined represents the IE associated with the example embodiments presented herein.

According to Radio Resource Control RRC Protocol Specification version 12.2.0: *Downlink information for each radio link*

| **Information Element/Group name** | **Need** | **Multi** | **Type and reference** | **Semantics description** | **Version** |
|---|---|---|---|---|---|
| CHOICE *mode* | MP | | | | |
| >FDD | | | | | |
| >>Primary CPICH info | MP | | Primary CPICH info 10.3.6.60 | | |
| >>Serving HS-DSCH radio link indicator | MP | | Boolean | The value TRUE indicates that this radio link is the serving HS-DSCH radio link | REL-5 |
| >>Serving E-DCH radio link indicator | MP | | Boolean | The value TRUE indicates that this radio link is the serving E-DCH radio link | REL-6 |
| >TDD | | | | | |
| >>Primary CCPCH info | MP | | Primary CCPCH info 10.3.6.57 | | |
| Cell ID | OP | | Cell ID 10.3.2.2 | | REL-4 |
| CHOICE *DPCH info* | OP | | | | REL-6 |
| >Downlink DPCH info for each RL | MP | | Downlink DPCH info for each RL 10.3.6.21 | | |
| >Downlink F-DPCH info for each RL | MP | | Downlink F-DPCH info for each RL 10.3.6.23ob | | REL-6 |
| **>Downlink without DPCH/F-DPCH info for each RL** | | | | | **REL-12** |
| | | | | | |
| E-AGCH Info | OP | | E-AGCH Info 10.3.6.100 | | REL-6 |
| E-ROCH Info | OP | | E-ROCH Info FDD 10.3.6.146 | | REL-11 |
| CHOICE *mode* | | | | | REL-7 |
| >FDD | | | | | REL-7 |
| >>CHOICE *E-HICH Information* | OP | | | | REL-6 |
| >>>E-HICH Information | MP | | E-HICH Info 10.3.6.101 | | REL-6 |
| >>>E-HICH release indicator | | | | (no data) | REL-6 |
| >>>Secondary TB E-HICH release indicator | | | | (no data) | REL-11 |
| >>CHOICE *E-RGCH Information* | OP | | | | REL-6 |
| >>>E-RGCH Information | MP | | E-RGCH Info 10.3.6.102 | | REL-6 |
| >>>E-RGCH release indicator | | | | (no data) | REL-6 |
| >>CHOICE *F-TPICH Info* | OP | | | | REL-11 |
| >>>F-TPICH Info | | | F-TPICH Info 10.3.6.127 | | REL-11 |
| >>>F-TPICH release indicator | | | | (no data) | REL-11 |
| >TDD | | | | (no data) | REL-7 |
| >>E-HICH Information | OP | | E-HICH Info 10.3.6.101 | | REL-7 |

*According to* Radio Resource Control RRC Protocol Specification version 12.2.0: *TheRadio link addition information*

| **Information Element/Group name** | **Need** | **Multi** | **Type and reference** | **Semantics description** | **Version** |
|---|---|---|---|---|---|
| Primary CPICH info | MP | | Primary CPICH info 10.3.6.60 | | |
| Cell ID | OP | | Cell ID 10.3.2.2 | | REL-4 |
| CHOICE *DPCH info* | MP | | | | REL-6 |
| >Downlink DPCH info for each RL | MP | | Downlink DPCH info for each RL 10.3.6.21 | | |
| >Downlink F-DPCH info for each RL | MP | | Downlink F-F-DPCH info for each RL 10.3.6.23ob | | REL-6 |
| **>Downlink without DPCH/F-DPCH info for each RL** | | | | | **REL-12** |
| E-HICH Information | OP | | E-HICH Info 10.3.6.101 | | REL-6 |
| E-RGCH Information | OP | | E-RGCH Info 10.3.6.102 | | REL-6 |
| F-TPICH info | OP | | F-TPICH Info 10.3.6.127 | | REL-11 |
| Target cell pre-configuration information | OP | | Target cell preconfigurat ion information 10.3.6.79a | | REL-8 |

### Example node configurations

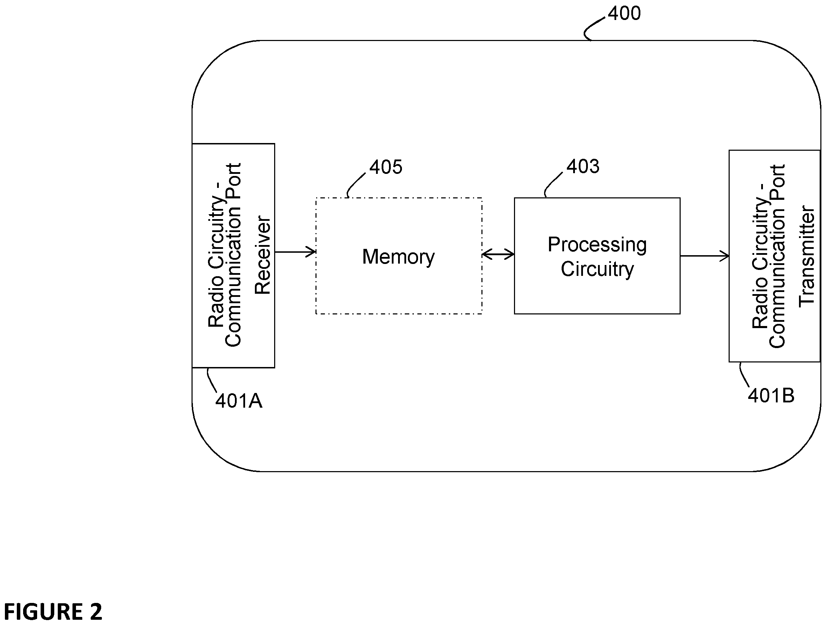

**Figure 2** illustrates an example node configuration of a RNC 400. The RNC may perform some of the example embodiments described herein. The RNC may comprise radio circuitry, a receiver or a communication port 401A or a transmitter 401B that may be configured to receive and/or transmit communication data, instructions, and/or messages. It should be appreciated that the radio circuitry or communication port 401A/B may be comprised as any number of transceiving, receiving, and/or transmitting units, module or circuitry. It should further be appreciated that the radio circuitry or communication 401A/B may be in the form of any input or output communications port known in the art. The radio circuitry or communication 401A/B may comprise RF circuitry and baseband processing circuitry (not shown).

The RNC may also comprise a processing unit, module or circuitry 403 which may be configured to provide and retrieve information as described herein. The processing circuitry 403 may be any suitable type of computation unit, for example, a microprocessor, digital signal processor (DSP), field programmable gate array (FPGA), or application specific integrated circuit (ASIC), or any other form of circuitry. The RNC may further comprise a memory unit or circuitry 405 which may be any suitable type of computer readable memory and may be of volatile and/or non-volatile type. The memory 405 may be configured to store received, transmitted, and/or measured data, device parameters, and information, compatibility and/or executable program instructions.

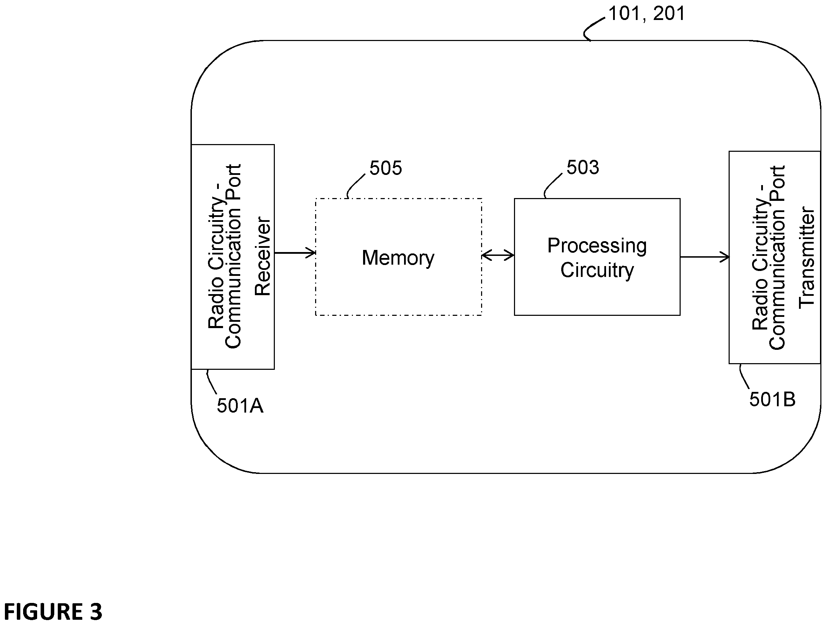

**Figure 3** illustrates an example node configuration of a radio network node. The radio network node may be a wireless terminal 101 or a Node B 201. The radio network node may perform some of the example embodiments described herein. The radio network node may comprise radio circuitry, a receiver or a communication port 501A or a transmitter 501B that may be configured to receive and/or transmit communication data, instructions, and/or messages. It should be appreciated that the radio circuitry or communication port 501A/B may be comprised as any number of transceiving, receiving, and/or transmitting units, module or circuitry. It should further be appreciated that the radio circuitry or communication 501A/B may be in the form of any input or output communications port known in the art. The radio circuitry or communication 501A/B may comprise RF circuitry and baseband processing circuitry (not shown).

The radio network node may also comprise a processing unit, module or circuitry 503 which may be configured to provide and retrieve information as described herein. The processing circuitry 503 may be any suitable type of computation unit, for example, a microprocessor, digital signal processor (DSP), field programmable gate array (FPGA), or application specific integrated circuit (ASIC), or any other form of circuitry. The radio network node may further comprise a memory unit or circuitry 505 which may be any suitable type of computer readable memory and may be of volatile and/or non-volatile type. The memory 505 may be configured to store received, transmitted, and/or measured data, device parameters, information, compatibility and/or executable program instructions.

### Example node operations

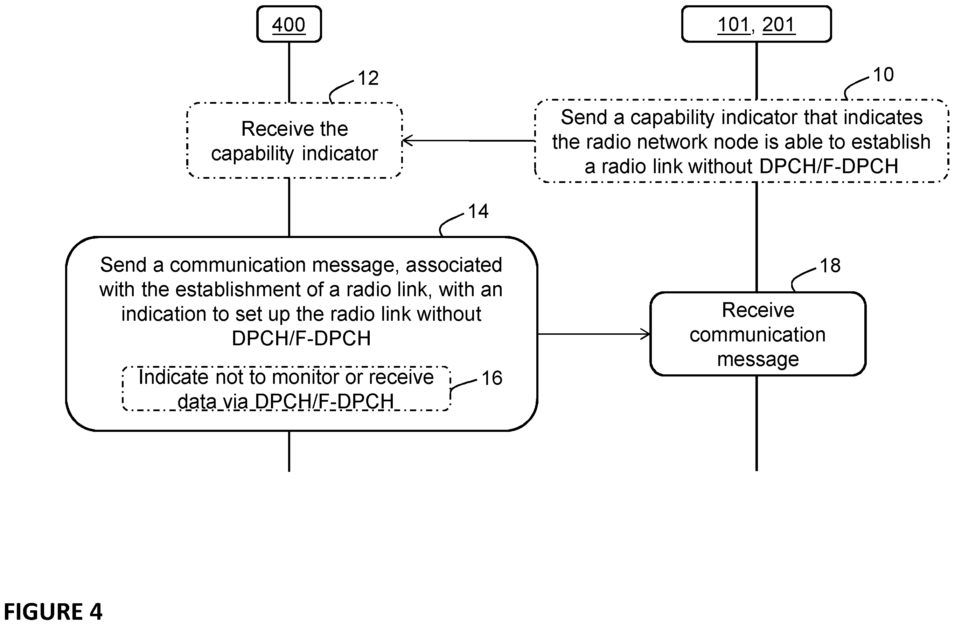

**Figure 4** is a flow diagram depicting example operations which may be taken by the radio network node and the RNC for establishing a radio link without a DPCH/F-DPCH as described herein. It should be appreciated that Figure 4 comprises some operations which are illustrated with a solid border and some operations which are illustrated with a dashed border. The operations which are comprised in a solid border are operations which are comprised in the broadest example embodiment. The operations which are comprised in a dashed border are example embodiments which may be comprised in, or a part of, or are further operations which may be taken in addition to the operations of the broader example embodiments. It should be appreciated that these operations need not be performed in order. Furthermore, it should be appreciated that not all of the operations need to be performed. The example operations may be performed in any order and in any combination. The example operations are further described in at least the non-limiting summary of example embodiments.

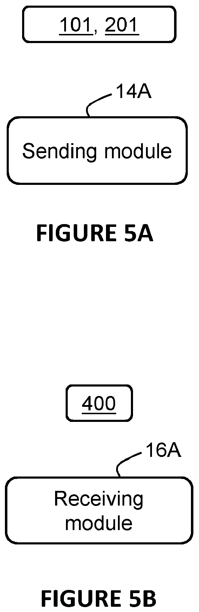

**Figures 5A** and **5B** are a module diagrams depicting modules which may perform at least some of the operations of Figure 4.

### Example operation 10

According to some of the example embodiments, the radio network node 101 or 201 is configured to send 10, to the RNC 400, a capability indicator that indicates the radio network node is able to establish a radio link without DPCH/F-DPCH. The receiver 501A is configured to send, to the RNC, the capability indicator that indicates the radio network node is able to establish the radio link without DPCH/F-DPCH.

It should be appreciated that the radio network node may be either a wireless terminal 101 or a Node B 201. An example of the capability indicator of example operation 10 is provided in Figure 1, message 2.

### Example operation 12

According to some of the example embodiments, the RNC 400 is configured to receive 12, from the radio network node 101 or 201, a capability indicator that indicates a wireless terminal is able to establish a radio link without a DPCH/F-DPCH. The receiver 401A is configured to receive, from the radio network node 101 or 201, the capability indicator that indicates the wireless terminal is able to establish a radio link without a DPCH/F-DPCH.

An example of the capability indicator of example operation 10 is provided in Figure 1, message 2. The capability indicator may be used to inform the RNC whether or not the establishment of a radio link without DPCH/F-DPCH is possible for an associated wireless terminal or Node B.

### Operation 14

The RNC 400 is configured to send, to a radio network node 101 or 201, a communication message associated with the establishment of the radio link. The communication message comprises an indicator providing an indication to set up the radio link without the DPCH/F-DPCH. The transmitter 401B is configured to send, to the radio network node, the communication message associated with the establishment of the radio link. The sending module 14A is configured to perform operation 14.

According to some of the example embodiments, the indicator may be a message type, a cause code, instructions or an IE comprising an absence of a DPCH/F-DPCH configuration. According to some of the example embodiments, the communication message comprises an indication to establish the radio link with only an E-HICH or both a E-DCH and a E-RGCH.

### Example operation 16

According to some example embodiments, in which the radio network node is a wireless terminal 101, the RNC 400 is further configured to indicate, via the indicator described in operation 14, not to monitor or receive data via the DPCH/F-DPCH.

Example embodiment 16 is applicable with other channels currently allowed by the standard. For example, the wireless terminal will be informed by the RNC not to monitor or receive data via the DPCH/F-DPCH but the wireless terminal will use the E-HICH only or in another configuration the wireless terminal will use the E-HICH and the E-RGCH.

### Operation 18

The radio network node 101 or 201 is configured to receive 18, from the RNC 400, the communication message associated with the establishment of the radio link. The communication message comprises the indicator providing the indication for establishing the radio link without the DPCH/F-DPCH. The receiver 501A is configured to receive, from the RNC, the communication message associated with the establishment of the radio link. The receiving module 18A is configured to perform operation 18.

As described in relation to operation 14, it should be appreciated that according to some of the example embodiments, the indicator may be a message type, a cause code, instructions or an IE comprising an absence of a DPCH/F-DPCH configuration. According to some of the example embodiments, the communication message comprises an indication to establish the radio link with only an E-HICH or both a E-DCH and a E-RGCH.

It should be noted that although terminology from 3GPP LTE has been used herein to explain the example embodiments, this should not be seen as limiting the scope of the example embodiments to only the aforementioned system. Other wireless systems, including WCDMA, WiMax, UMB, WiFi and GSM, may also benefit from the example embodiments disclosed herein.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

Also note that terminology such as user equipment should be considered as non-limiting. A device or user equipment as the term is used herein, is to be broadly interpreted to include a radiotelephone having ability for Internet/intranet access, web browser, organizer, calendar, a camera (e.g., video and/or still image camera), a sound recorder (e.g., a microphone), and/or global positioning system (GPS) receiver; a personal communications system (PCS) user equipment that may combine a cellular radiotelephone with data processing; a personal digital assistant (PDA) that can include a radiotelephone or wireless communication system; a laptop; a camera (e.g., video and/or still image camera) having communication ability; and any other computation or communication device capable of transceiving, such as a personal computer, a home entertainment system, a television, etc. It should be appreciated that the term user equipment may also comprise any number of connected devices. Furthermore, it should be appreciated that the term 'user equipment' shall be interpreted as defining any device which may have an internet or network access.

The various example embodiments described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that performs particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

## Claims

1. A method, in a Radio Network Controller, RNC, **(400)** for establishing a radio link without a Dedicated Physical Channel, DPCH/Fractional-DPCH, F-DPCH, in a wireless communications network, the method **characterized by**: sending **(14),** to a radio network node **(101, 201),** a communication message associated with the establishment of the radio link, the communication message comprising an indicator providing an indication to set up the radio link without the DPCH/F-DPCH.

2. The method of claim 1, wherein the communication message comprises an indication to establish the radio link with a downlink Enhanced Dedicated Channel, E-DCH control channel, comprising only an E-DCH Acknowledgement Indicator Channel, E-HICH, or both an E-HICH and an E-DCH Relative Grant Channel, E-RGCH.

3. The method of any of claims 1-2, wherein the indicator is an information element, cause code, message type, or instructions comprising an absence of a DPCH and F-DPCH configuration.

4. The method of any of claims 1-3, wherein the radio network node is a Node B node **(201)** or a wireless terminal **(101).**

5. The method of any of claims 1-4, wherein the radio network node **(101, 201)** is a wireless terminal **(101),** the method further comprising indicating **(16),** via the indicator, not to monitor or receive data via the F-DPCH/DPCH.

6. The method of any of claims 1-5, further comprising receiving **(12),** from the radio network node **(101, 201),** a capability indicator that indicates a wireless terminal is able to establish a radio link without a DPCH/F-DPCH.

7. A Radio Network Controller, RNC, **(400)** for establishing a radio link without a Dedicated Physical Channel, DPCH/Fractional-DPCH, F-DPCH, in a wireless communications network, the RNC **characterized by** comprising:
a transmitter **(401B)** configured to transmit, to a radio network node **(101, 201),** a communication message associated with the establishment of the radio link, the communication message comprising an indicator providing an indication to set up the radio link without the DPCH/F-DPCH.

8. The RNC **(400)** of claim 7, wherein the communication message comprises an indication to establish the radio link with a downlink Enhanced Dedicated Channel, E-DCH control channel, comprising only an E-DCH Acknowledgement Indicator Channel, E-HICH, or both an E-HICH and an E-DCH Relative Grant Channel, E-RGCH.

9. The RNC **(400)** of any of claims 6-7, wherein the indicator is an information element, cause code, message type, or instructions comprising an absence of a DPCH and F-DPCH configuration.

10. The RNC **(400)** of any of claims 6-9, wherein the radio network node is a Node B node **(201)** or a wireless terminal **(101).**

11. The RNC **(400)** of any of claims 6-10, wherein the radio network node **(101, 201)** is a wireless terminal **(101),** and wherein indicator indicates not to monitor or receive data via the F-DPCH/DPCH.

12. The RNC **(400)** of any of claims 6-11, further comprising a receiver **(401A)** configured to receive, from the radio network node **(101, 201),** a capability indicator that indicates a wireless terminal is able to establish a radio link without a DPCH/F-DPCH.

13. A method, in a radio network node **(101, 201),** for establishing a radio link without a Dedicated Physical Channel, DPCH/Fractional-DPCH, F-DPCH, in a wireless communications network, the method **characterized by**:
receiving **(18),** from a Radio Network Controller, RNC, **(400)** a communication message associated with the establishment of the radio link, the communication message comprising an indicator providing an indication for establishing the radio link without the DPCH/F-DPCH.

14. The method of claim 13, wherein the communication message comprises an indication to establish the radio link with a downlink Enhanced Dedicated Channel control channel, E-DCH, comprising only an E-DCH Acknowledgement Indicator Channel, E-HICH, or both an E-HICH and an E-DCH Relative Grant Channel, E-RGCH.

15. The method of any of claims 13-14, wherein the indicator is an information element, cause code, message type, or instructions comprising an absence of a DPCH and F-DPCH configuration.

16. The method of any of claims 13-15, wherein the radio network node is a Node B node **(201)** or a wireless terminal **(101).**

17. The method of any of claims 13-16, wherein the radio network node **(101, 201)** is a wireless terminal **(101),** and wherein the indicator indicates not to monitor or receive data via the F-DPCH/DPCH.

18. The method of any of claims 13-17, further comprising sending **(10),** to the RNC **(400),** a capability indicator that indicates the radio network node is able to establish a radio link without a DPCH/F-DPCH.

19. A radio network node **(101, 201)** for establishing a radio link without a Dedicated Physical Channel, DPCH/Fractional-DPCH, F-DPCH, in a wireless communications network, the radio network node **characterized by** comprising:
a receiver **(501A)** configured to receive, from a Radio Network Controller, RNC, **(400)** a communication message associated with the establishment of the radio link, the communication message comprising an indicator providing an indication for establishing the radio link without the DPCH/F-DPCH.

20. The radio network node **(101, 201)** of claim 19, wherein the communication message comprises an indication to establish the radio link with a downlink Enhanced Dedicated Channel, E-DCH control channel, comprising only an E-DCH Acknowledgement Indicator Channel, E-HICH, or both an E-HICH and an E-DCH Relative Grant Channel, E-RGCH.

21. The radio network node **(101, 201)** of any of claims 19-20, wherein the indicator is an information element, cause code, message type, or instructions comprising an absence of a DPCH and F-DPCH configuration.

22. The radio network node **(101, 201)** of any of claims 19-21, wherein the radio network node is a Node B node **(201)** or a wireless terminal **(101).**

23. The radio network node **(101, 201)** of any of claims 19-22, wherein the radio network node is a wireless terminal **(101),** and wherein the indicator indicates not to monitor or receive data via the DPCH/F-DPCH.

24. The radio network node **(101, 201)** of any of claims 19-23, further comprising a transmitter **(501B)** configured to send, to the RNC, a capability indicator that indicates a wireless terminal is able to establish a radio link without a DPCH/F-DPCH.

## Patentansprüche

1. Verfahren in einer Funknetzwerksteuerung, RNC, (400) zum Einrichten einer Funkverbindung ohne einen dedizierten physikalischen Kanal, DPCH/fraktionierten DPCH, F-DPCH, in einem drahtlosen Kommunikationsnetzwerk, das Verfahren **gekennzeichnet durch**:
Senden (14), an einen Funknetzwerkknoten (101, 201), einer mit der Einrichtung der Funkverbindung assoziierten Kommunikationsnachricht, wobei die Kommunikationsnachricht eine Angabe umfasst, die eine Angabe zum Einrichten der Funkverbindung ohne den DPCH/F-DPCH bereitstellt.

2. Verfahren nach Anspruch 1, wobei die Kommunikationsnachricht eine Angabe zum Einrichten der Funkverbindung mit einem Steuerkanal eines erweiterten dedizierten Abwärtsstreckenkanals, E-DCH, umfasst, umfassend nur einen E-DCH-Bestätigungsangabekanal, E-HICH, oder sowohl einen E-HICH als auch einen E-DCH-Relativgewährungskanal, E-RGCH.

3. Verfahren nach einem der Ansprüche 1-2, wobei die Angabe ein Informationselement, ein Ursachencode, ein Nachrichtentyp oder Anweisungen ist, umfassend eine Abwesenheit einer DPCH- und F-DPCH-Konfiguration.

4. Verfahren nach einem der Ansprüche 1-3, wobei der Funknetzwerkknoten ein Knoten-B-Knoten (201) oder ein drahtloses Endgerät (101) ist.

5. Verfahren nach einem der Ansprüche 1-4, wobei der Funknetzwerkknoten (101, 201) ein drahtloses Endgerät (101) ist, das Verfahren ferner umfassend Angeben (16), über die Angabe, Daten über den F-DPCH/DPCH nicht zu überwachen oder zu empfangen.

6. Verfahren nach einem der Ansprüche 1-5, ferner umfassend Empfangen (12), von dem Funknetzwerkknoten (101, 201), einer Fähigkeitsangabe, die angibt, dass ein drahtloses Endgerät imstande ist, eine Funkverbindung ohne einen DPCH/F-DPCH einzurichten.

7. Funknetzwerksteuerung, RNC, (400) zum Einrichten einer Funkverbindung ohne einen dedizierten physikalischen Kanal, DPCH/fraktionierten DPCH, F-DPCH, in einem drahtlosen Kommunikationsnetzwerk, die RNC **dadurch gekennzeichnet, dass** sie umfasst:
einen Sender (401B), konfiguriert zum Senden, an einen Funknetzwerkknoten (101, 201), einer mit der Einrichtung der Funkverbindung assoziierten Kommunikationsnachricht, wobei die Kommunikationsnachricht eine Angabe umfasst, die eine Angabe zum Einrichten der Funkverbindung ohne den DPCH/F-DPCH bereitstellt.

8. RNC (400) nach Anspruch 7, wobei die Kommunikationsnachricht eine Angabe zum Einrichten der Funkverbindung mit einem Steuerkanal eines erweiterten dedizierten Abwärtsstreckenkanals, E-DCH, umfasst, umfassend nur einen E-DCH-Bestätigungsangabekanal, E-HICH, oder sowohl einen E-HICH als auch einen E-DCH-Relativgewährungskanal, E-RGCH.

9. RNC (400) nach einem der Ansprüche 6-7, wobei die Angabe ein Informationselement, ein Ursachencode, ein Nachrichtentyp oder Anweisungen ist, umfassend eine Abwesenheit einer DPCH- und F-DPCH-Konfiguration.

10. RNC (400) nach einem der Ansprüche 6-9, wobei der Funknetzwerkknoten ein Knoten-B-Knoten (201) oder ein drahtloses Endgerät (101) ist.

11. RNC (400) nach einem der Ansprüche 6-10, wobei der Funknetzwerkknoten (101, 201) ein drahtloses Endgerät (101) ist und wobei die Angabe angibt, Daten über den F-DPCH/DPCH nicht zu überwachen oder zu empfangen.

12. RNC (400) nach einem der Ansprüche 6-11, ferner umfassend einen Empfänger (401A), konfiguriert zum Empfangen, von dem Funknetzwerkknoten (101, 201), einer Fähigkeitsangabe, die angibt, dass ein drahtloses Endgerät imstande ist, eine Funkverbindung ohne einen DPCH/F-DPCH einzurichten.

13. Verfahren, in einem Funknetzwerkknoten (101, 201), zum Einrichten einer Funkverbindung ohne einen dedizierten physikalischen Kanal, DPCH/fraktionierten DPCH, F-DPCH, in einem drahtlosen Kommunikationsnetzwerk, das Verfahren **gekennzeichnet durch**:
Empfangen (18), von einer Funknetzwerksteuerung (400), einer mit der Einrichtung der Funkverbindung assoziierten Kommunikationsnachricht, wobei die Kommunikationsnachricht eine Angabe umfasst, die eine Angabe zum Einrichten der Funkverbindung ohne den DPCH/F-DPCH bereitstellt.

14. Verfahren nach Anspruch 13, wobei die Kommunikationsnachricht eine Angabe zum Einrichten der Funkverbindung mit einem Steuerkanal eines erweiterten dedizierten Abwärtsstreckenkanals, E-DCH, umfasst, umfassend nur einen E-DCH-Bestätigungsangabekanal, E-HICH, oder sowohl einen E-HICH als auch einen E-DCH-Relativgewährungskanal, E-RGCH.

15. Verfahren nach einem der Ansprüche 13-14, wobei die Angabe ein Informationselement, ein Ursachencode, ein Nachrichtentyp oder Anweisungen ist, umfassend eine Abwesenheit einer DPCH- und F-DPCH-Konfiguration.

16. Verfahren nach einem der Ansprüche 13-15, wobei der Funknetzwerkknoten ein Knoten-B-Knoten (201) oder ein drahtloses Endgerät (101) ist.

17. Verfahren nach einem der Ansprüche 13-16, wobei der Funknetzwerkknoten (101, 201) ein drahtloses Endgerät (101) ist und wobei die Angabe angibt, Daten über den F-DPCH/DPCH nicht zu überwachen oder zu empfangen.

18. Verfahren nach einem der Ansprüche 13-17, ferner umfassend Senden (10), an die RNC (400), einer Fähigkeitsangabe, die angibt, dass der Funknetzwerkknoten imstande ist, eine Funkverbindung ohne einen DPCH/F-DPCH einzurichten.

19. Funknetzwerkknoten (101, 201) zum Einrichten einer Funkverbindung ohne einen dedizierten physikalischen Kanal, DPCH/fraktionierten DPCH, F-DPCH, in einem drahtlosen Kommunikationsnetzwerk, der Funknetzwerkknoten **dadurch gekennzeichnet, dass** er umfasst:
einen Empfänger (501A), konfiguriert zum Empfangen, von einer Funknetzwerksteuerung, RNC, (400), einer mit der Einrichtung der Funkverbindung assoziierten Kommunikationsnachricht, wobei die Kommunikationsnachricht eine Angabe umfasst, die eine Angabe zum Einrichten der Funkverbindung ohne den DPCH/F-DPCH bereitstellt.

20. Funknetzwerkknoten (101, 201) nach Anspruch 19, wobei die Kommunikationsnachricht eine Angabe zum Einrichten der Funkverbindung mit einem Steuerkanal eines erweiterten dedizierten Abwärtsstreckenkanals, E-DCH, umfasst, umfassend nur einen E-DCH-Bestätigungsangabekanal, E-HICH, oder sowohl einen E-HICH als auch einen E-DCH-Relativgewährungskanal, E-RGCH.

21. Funknetzwerkknoten (101, 201) nach einem der Ansprüche 19-20, wobei die Angabe ein Informationselement, ein Ursachencode, ein Nachrichtentyp oder Anweisungen ist, umfassend eine Abwesenheit einer DPCH- und F-DPCH-Konfiguration.

22. Funknetzwerkknoten (101, 201) nach einem der Ansprüche 19-21, wobei der Funknetzwerkknoten ein Knoten-B-Knoten (201) oder ein drahtloses Endgerät (101) ist.

23. Funknetzwerkknoten (101, 201) nach einem der Ansprüche 19-22, wobei der Funknetzwerkknoten ein drahtloses Endgerät (101) ist und wobei die Angabe angibt, Daten über den F-DPCH/DPCH nicht zu überwachen oder zu empfangen.

24. Funknetzwerkknoten (101, 201) nach einem der Ansprüche 19-23, ferner umfassend einen Sender (501B), konfiguriert zum Senden, an die RNC, einer Fähigkeitsangabe, die angibt, dass ein drahtloses Endgerät imstande ist, eine Funkverbindung ohne einen DPCH/F-DPCH einzurichten.

## Revendications

1. Procédé, dans un contrôleur de réseau radio, RNC, (400) pour établir une liaison radio sans canal physique dédié, DPCH/DPCH fractionnaire, F-DPCH, dans un réseau de communication sans fil, le procédé étant **caractérisé par** :
l'envoi (14), sur un noeud de réseau radio (101, 201), d'un message de communication qui est associé à l'établissement de la liaison radio, le message de communication comprenant un indicateur qui fournit une indication pour instaurer la liaison radio sans le DPCH/F-DPCH.

2. Procédé selon la revendication 1, dans lequel le message de communication comprend une indication pour établir la liaison radio avec un canal de commande de canal dédié amélioré, E-DCH, de liaison descendante, comprenant seulement un canal d'indicateur d'accusé de réception d'E-DCH, E-HICH, ou à la fois un E-HICH et un canal d'octroi relatif d'E-DCH, E-RGCH.

3. Procédé selon l'une quelconque des revendications 1 à 2, dans lequel l'indicateur est un élément d'information, un code de cause, un type de message ou des instructions qui comprennent une absence d'une configuration DPCH et F-DPCH.

4. Procédé selon l'une quelconque des revendications 1 à 3, dans lequel le noeud de réseau radio est un noeud Noeud B (201) ou un terminal sans fil (101).

5. Procédé selon l'une quelconque des revendications 1 à 4, dans lequel le noeud de réseau radio (101, 201) est un terminal sans fil (101), le procédé comprenant en outre l'indication (16), via l'indicateur, de ne pas surveiller ou de ne pas recevoir des données via le F-DPCH/DPCH.

6. Procédé selon l'une quelconque des revendications 1 à 5, comprenant en outre la réception (12), depuis le noeud de réseau radio (101, 201), d'un indicateur de capacité qui indique qu'un terminal sans fil dispose de la capacité d'établir une liaison radio sans DPCH/F-DPCH.

7. Contrôleur de réseau radio, RNC, (400) pour établir une liaison radio sans canal physique dédié, DPCH/DPCH fractionnaire, F-DPCH, dans un réseau de communication sans fil, le RNC étant **caractérisé en ce qu'**il comprend :
un émetteur (401B) qui est configuré de manière à émettre, sur un noeud de réseau radio (101, 201), un message de communication qui est associé à l'établissement de la liaison radio, le message de communication comprenant un indicateur qui fournit une indication pour instaurer la liaison radio sans le DPCH/F-DPCH.

8. RNC (400) selon la revendication 7, dans lequel le message de communication comprend une indication pour établir la liaison radio avec un canal de commande de canal dédié amélioré, E-DCH, de liaison descendante, comprenant seulement un canal d'indicateur d'accusé de réception d'E-DCH, E-HICH, ou à la fois un E-HICH et un canal d'octroi relatif d'E-DCH, E-RGCH.

9. RNC (400) selon l'une quelconque des revendications 6 à 7, dans lequel l'indicateur est un élément d'information, un code de cause, un type de message ou des instructions qui comprennent une absence d'une configuration DPCH et F-DPCH.

10. RNC (400) selon l'une quelconque des revendications 6 à 9, dans lequel le noeud de réseau radio est un noeud Noeud B (201) ou un terminal sans fil (101).

11. RNC (400) selon l'une quelconque des revendications 6 à 10, dans lequel le noeud de réseau radio (101, 201) est un terminal sans fil (101), et dans lequel l'indicateur indique de ne pas surveiller ou de ne pas recevoir des données via le F-DPCH/DPCH.

12. RNC (400) selon l'une quelconque des revendications 6 à 11, comprenant en outre un récepteur (401A) qui est configuré de manière à recevoir, depuis le noeud de réseau radio (101, 201), un indicateur de capacité qui indique qu'un terminal sans fil dispose de la capacité d'établir une liaison radio sans DPCH/F-DPCH.

13. Procédé, dans un noeud de réseau radio (101, 201), pour établir une liaison radio sans canal physique dédié, DPCH/DPCH fractionnaire, F-DPCH, dans un réseau de communication sans fil, le procédé étant **caractérisé par** :
la réception (18), depuis un contrôleur de réseau radio, RNC, (400), d'un message de communication qui est associé à l'établissement de la liaison radio, le message de communication comprenant un indicateur qui fournit une indication pour établir la liaison radio sans le DPCH/F-DPCH.

14. Procédé selon la revendication 13, dans lequel le message de communication comprend une indication pour établir la liaison radio avec un canal de commande de canal dédié amélioré, E-DCH, de liaison descendante, comprenant seulement un canal d'indicateur d'accusé de réception d'E-DCH, E-HICH, ou à la fois un E-HICH et un canal d'octroi relatif d'E-DCH, E-RGCH.

15. Procédé selon l'une quelconque des revendications 13 à 14, dans lequel l'indicateur est un élément d'information, un code de cause, un type de message ou des instructions qui comprennent une absence d'une configuration DPCH et F-DPCH.

16. Procédé selon l'une quelconque des revendications 13 à 15, dans lequel le noeud de réseau radio est un noeud Noeud B (201) ou un terminal sans fil (101).

17. Procédé selon l'une quelconque des revendications 13 à 16, dans lequel le noeud de réseau radio (101, 201) est un terminal sans fil (101), et dans lequel l'indicateur indique de ne pas surveiller ou de ne pas recevoir des données via le F-DPCH/DPCH.

18. Procédé selon l'une quelconque des revendications 13 à 17, comprenant en outre l'envoi (10), sur le RNC (400), d'un indicateur de capacité qui indique que le noeud de réseau radio dispose de la capacité d'établir une liaison radio sans DPCH/F-DPCH.

19. Noeud de réseau radio (101, 201) pour établir une liaison radio sans canal physique dédié, DPCH/DPCH fractionnaire, F-DPCH, dans un réseau de communication sans fil, le noeud de réseau radio étant **caractérisé en ce qu'**il comprend :
un récepteur (501A) qui est configuré de manière à recevoir, depuis un contrôleur de réseau radio, RNC, (400), un message de communication qui est associé à l'établissement de la liaison radio, le message de communication comprenant un indicateur qui fournit une indication pour établir la liaison radio sans le DPCH/F-DPCH.

20. Noeud de réseau radio (101, 201) selon la revendication 19, dans lequel le message de communication comprend une indication pour établir la liaison radio avec un canal de commande de canal dédié amélioré, E-DCH, de liaison descendante, comprenant seulement un canal d'indicateur d'accusé de réception d'E-DCH, E-HICH, ou à la fois un E-HICH et un canal d'octroi relatif d'E-DCH, E-RGCH.

21. Noeud de réseau radio (101, 201) selon l'une quelconque des revendications 19 à 20, dans lequel l'indicateur est un élément d'information, un code de cause, un type de message ou des instructions qui comprennent une absence d'une configuration DPCH et F-DPCH.

22. Noeud de réseau radio (101, 201) selon l'une quelconque des revendications 19 à 21, dans lequel le noeud de réseau radio est un noeud Noeud B (201) ou un terminal sans fil (101).

23. Noeud de réseau radio (101, 201) selon l'une quelconque des revendications 19 à 22, dans lequel le noeud de réseau radio est un terminal sans fil (101), et dans lequel l'indicateur indique de ne pas surveiller ou de ne pas recevoir des données via le DPCH/F-DPCH.

24. Noeud de réseau radio (101, 201) selon l'une quelconque des revendications 19 à 23, comprenant en outre un émetteur (501B) qui est configuré de manière à envoyer, sur le RNC, un indicateur de capacité qui indique qu'un terminal sans fil dispose de la capacité d'établir une liaison radio sans DPCH/F-DPCH.
